Europäisches Patentamt

European Patent Office

Office européen des brevets

(11) Numéro de publication: **0 454 534 B1**

(12) **FASCICULE DE BREVET EUROPEEN**

(45) Date de publication de fascicule du brevet: **12.10.94** (51) Int. Cl.⁵: **B60R 16/02**, G01R 29/00

(21) Numéro de dépôt: **91400995.6**

(22) Date de dépôt: **16.04.91**

(54) **Dispositif de détection d'impulsions de courant.**

(30) Priorité: **27.04.90 FR 9005376**

(43) Date de publication de la demande:
**30.10.91 Bulletin 91/44**

(45) Mention de la délivrance du brevet:
**12.10.94 Bulletin 94/41**

(84) Etats contractants désignés:
**DE ES GB IT**

(56) Documents cités:
**EP-A- 0 083 804
EP-A- 0 327 456
EP-A- 0 358 544
GB-A- 1 465 358
US-A- 3 775 675**

**IBM TECHNICAL DISCLOSURE BULLETIN. vol. 32, no. 2, juillet 1989, NEW YORK USpages 414 - 415; "OVER CURRENT DETECTION FOR SWITCHING REGULATOR POWERSUPPLIES"**

(73) Titulaire: **REGIE NATIONALE DES USINES RE-NAULT S.A.
34, Ouai du Point du Jour
F-92109 Boulogne Billancourt (FR)**

(72) Inventeur: **Millereau, Jean-Luc
74, route de Maisons
F-78400 Chatou (FR)**
Inventeur: **Lenoir, Dominique
32, Avenue du Général de Gaulle
F-92360 Meudon la Forêt (FR)**

(74) Mandataire: **Ernst-Schonberg, Michel et al
REGIE NATIONALE DES USINES RENAULT SA
Sce 0267
860, quai de Stalingrad
F-92109 Boulogne Billancourt Cédex (FR)**

Rank Xerox (UK) Business Services
(3.10/3.09/3.3.3)

# Description

La présente invention est relative à un dispositif de détection d'impulsions de courant et, plus particulièrement, à un tel dispositif conçu pour détecter des impulsions de courant induites dans une ligne sur laquelle la tension est régulée.

À la demande de brevet français No.9002570 déposée le 1er mars 1990 par la demanderesse, N° de publication FR-A-2 659 155, correspondant à la EP-A-0 444 997 (étant déposée avant, mais publiée après la date de priorité de la présente demande, formant l'état de technique selon l'article 54 (3) et (4) CBE), on décrit un dispositif de commande de l'alimentation électrique d'une pluralité de modules électroniques interconnectés par un bus de données avec une unité centrale de traitement de données, une ligne commune assurant l'alimentation électrique des modules. Le dispositif comprend des moyens installés dans l'unité centrale et sensibles à un état prédéterminé du dispositif pour commander sa mise en état de veille en coupant l'alimentation des modules par la ligne commune et en assurant alors l'alimentation électrique d'ou moins un circuit de génération de signaux de réveil formant partie d'un module, par l'intermédiaire d'au moins une ligne du bus de données, et des moyens sensibles aux signaux de réveil émis sur cette ligne par le circuit de génération de tels signaux, pour couper l'alimentation des modules par le bus de données et pour rétablir l'alimentation des modules par la ligne commune d'alimentation électrique.

Dans l'application décrite à la demande de brevet précitée, les modules électroniques sont embarqués dans un véhicule automobile pour coopérer avec des organes périphériques tels que des actionneurs ou des capteurs, et sont interconnectés par un bus de données constituant un réseau local de transmission de données multiplexées. La ligne commune d'alimentation de ces modules est connectée à la batterie du véhicule. Pour limiter la consommation électrique des modules lorsque le véhicule est au repos, seuls restent alors alimentés des circuits de "réveil" équipant certains modules, cette alimentation étant assurée par une ligne du bus de données, comme indiqué ci-dessus. A la fin d'une période de repos du véhicule, terminée par l'introduction d'une clé de contact dans sa serrure, par exemple, cette action provoque l'émission d'impulsions électriques sur cette ligne du bus de données pour provoquer le "réveil" de tous les modules et le rétablissement de l'alimentation électrique normale des modules nécessaire lorsque le véhicule doit être mis en route. Ce réveil est commandé par l'unité centrale de traitement de données interconnectée avec ces modules, cette unité centrale devant alors être associée à un dispositif de détection des impulsions de "réveil".

Comme indiqué dans la demande de brevet précitée, les impulsions électriques de réveil émises sur une ligne du bus de données sont des impulsions de courant et non des impulsions de tension car, dans le milieu fortement perturbé que constitue un véhicule automobile, on s'affranchit ainsi de nombres de signaux de tension parasites induits électromagnétiquement dans la ligne par l'environnement.

Par ailleurs, cette ligne devant servir, en période de veille, à l'alimentation de circuits de génération de signaux de réveil, doit délivrer une tension stabilisée à ces circuits. Un régulateur de tension est alors interposé à cet effet entre la batterie du véhicule et cette ligne du bus de données.

Il s'agit donc de détecter des impulsions de courant absorbées sur cette ligne par un circuit de génération de telles impulsions, sans perturber la tension d'alimentation des circuits alimentés en période de veille par cette ligne. Si l'on opérait classiquement cette détection par la variation de tension induite par l'impulsion de courant aux bornes d'une résistance connectée sur cette ligne, cette variation de tension aurait pour effet de perturber l'alimentation de ces circuits.

La présente invention a donc pour but de réaliser un dispositif de détection d'impulsions de courant induites sur une ligne électrique alimentée par une source d'énergie électrique continue, à travers un régulateur de tension, qui ne présente pas cet inconvénient.

La présente invention a aussi pour but de réaliser un tel dispositif conçu pour assurer seulement la détection d'impulsions de courant calibrées en amplitude, représentatives d'une information utile, en éliminant ainsi des impulsions non significatives.

La présente invention a encore pour but de réaliser un tel dispositif qui soit efficacement protégé de dérives en température.

On atteint ces buts de l'invention, ainsi que d'autres qui apparaîtront dans la suite de la présente description, avec les caractéristiques de la revendication 1. Selon l'invention, un dispositif de détection d'impulsions de courant induites sur une ligne électrique alimentée par un régulateur de tension est connecté à une source d'énergie électrique continue, ce dispositif comprenant des moyens pour prélever une impulsion de tension correspondant à une impulsion de courant induite sur la ligne. Suivant l'invention ces moyens sont connectés aux bornes d'une impédance placée sur une ligne connectant la source d'énergie électrique au régulateur de tension, pour être sensibles, à travers celui-ci, aux impulsions de courant induites sur la ligne alimentée par le régulateur, sans perturber la tension établie sur celle-ci.

Suivant une autre caractéristique du dispositif selon l'invention, celui-ci comprend en outre des moyens de génération d'une tension de référence prédéterminée, des moyens de comparaison connectés à ces moyens de génération et aux moyens de prélèvement d'une impulsion de tension aux bornes de l'impédance, et des moyens de commutation commandés par ces moyens de comparaison pour émettre sur une ligne de sortie des impulsions logiques de tension images d'impulsions de tension détectées par les moyens de prélèvement et d'amplitude supérieure à la tension de référence.

On peut ainsi éliminer toutes les impulsions de courant correspondant à des impulsions de tension d'amplitude inferieure à cette tension de référence, lorsque de telles impulsions sont susceptibles de parasiter la détection.

Suivant une autre caractéristique du dispositif selon l'invention, les moyens de comparaison comprennent des premier et deuxième transistors appairés montés en émetteur commun, la tension de référence et les impulsions de tension détectées par les moyens de prélèvement étant appliquées simultanément en mode différentiel entre les bases de transistors, de manière à faire conduire le premier transistor en bloquant le deuxième quand les impulsions de tension prélevées sont d'amplitude supérieure à celle de la tension de référence et à bloquer le premier transistor en laissant l'autre conduire dans le cas opposé, le premier transistor commandant le moyen de commutation de l'état logique de la ligne de sortie. Ce moyen de commutation est contitué par un transistor dont la tension de base est commandée par le circuit émetteur-collecteur du premier transistor.

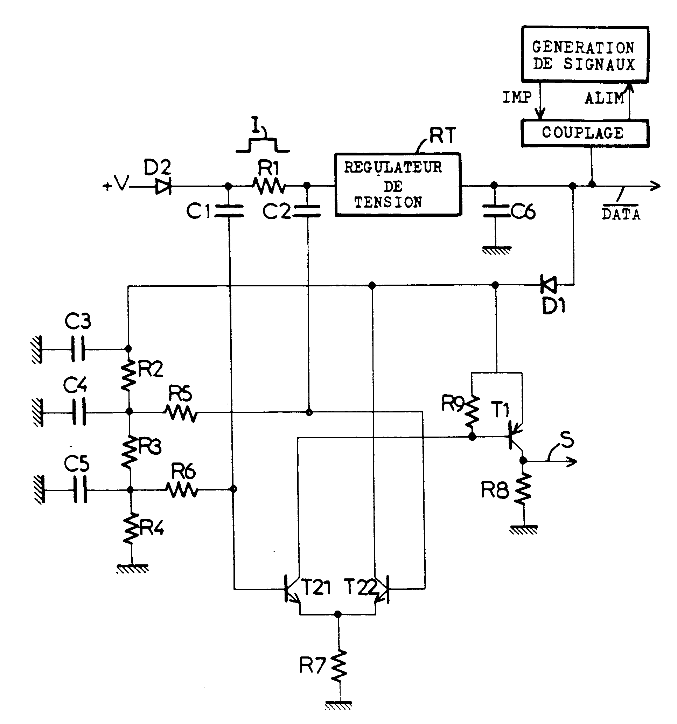

D'autres caractéristiques et avantages du dispositif selon l'invention apparaîtront à la lecture de la description qui va suivre et à l'examen du dessin annexé dans lequel la figure unique représente un schéma du dispositif de détection suivant l'invention.

On se réfère à cette figure où il apparaît que le dispositif de détection selon l'invention est connecté à une ligne DATA elle-même connectée à un circuit de couplage interposé entre un circuit de génération de signaux et cette ligne. Ces circuits font partie d'un module électronique constituant un élément d'un ensemble de tels modules interconnectés par un bus de données et normalement alimentés par une ligne commune. Comme décrit en détail dans la demande de brevet précitée, le circuit de couplage convertit des impulsions de tension fournies par le circuit de génération de signaux en impulsions de courant induites sur la ligne $\overline{DATA}$. Celle-ci fait partie d'un bus de données bifilaire assurant normalement des transmissions série de données en mode différentiel entre deux lignes DATA et $\overline{DATA}$ pour des raisons d'immunité au bruit. En période de veille la ligne $\overline{DATA}$ assure l'alimentation des circuits de génération de signaux et des circuits de couplage à la place de la ligne d'alimentation assurant normalement cette fonction. Dans l'application automobile évoquée plus haut, les signaux en cause sont des signaux de "réveil" des modules électroniques interconnectés par le bus de données (DATA, $\overline{DATA}$).

Comme représenté à la figure unique, la ligne $\overline{DATA}$ est connectée à un régulateur de tension RT lui-même alimenté directement par une source d'énergie électrique +V constituée, par exemple, par la batterie d'un véhicule automobile équipé des modules électroniques mentionnés ci-dessus interconnectés dans un réseau local de transmissions multiplex. Ainsi la batterie délivrant par exemple une tension de +12 volts, le régulateur établit sur la ligne $\overline{DATA}$ une tension +5 volts régulée qui convient à l'alimentation des circuits de génération de signaux et des circuits de couplage, qui peuvent être réalisés en technologie CMOS par exemple. Une capacité C6 renforce la stabilisation de la tension de sortie du régulateur.

Comme on l'a indiqué plus haut, la détection d'impulsions de courant induites sur la ligne DATA pourrait être réalisée en installant une résistance sur cette ligne et en prélevant les impulsions de tension engendrées aux bornes de cette résistance par ces impulsions de courant. Les impulsions de tension ainsi créées aux bornes de cette résistance ont cependant pour inconvénient de perturber la tension d'alimentation des circuits de génération de signaux de réveil et des circuits de couplage alimentés par cette ligne, alors même qu'on a pris soin d'assurer cette alimentation à l'aide d'un régulateur de tension.

Suivant une caractéristique importante de la présente invention, on évite cet inconvénient en plaçant une impédance telle qu'une résistance R1 de détection d'impulsions en amont du régulateur de tension, sur la ligne d'alimentation de celui-ci. Il est clair que lorsqu'une impulsion de courant est appliquée sur la ligne $\overline{DATA}$, cette impulsion de courant se propage sur la ligne d'alimentation du régulateur de tension, à travers ce dernier. Ainsi peut-on prélever aux bornes de la résistance R1, une impulsion de tension représentative de l'apparition d'une impulsion de courant sur la ligne $\overline{DATA}$, sans perturber la tension régulée établie sur celle-ci par le régulateur de tension.

Suivant une autre caractéristique du dispositif selon l'invention, celui-ci est conçu pour ne détecter que des impulsions de courant d'une amplitude supérieure à une amplitude prédéterminée, ceci pour éviter de prendre en compte des impulsions parasites de moindre amplitude, sans signification.

Pour ce faire, le dispositif comprend des moyens pour comparer l'amplitude d'une impulsion de tension prélevée aux bornes de la résistance R1, à une tension prédéterminée établie aux bornes d'une résistance R3 formant partie d'un pont de résistances ( R2, R3, R4) connectées en série dans cet ordre entre la ligne $\overline{DATA}$ et la masse. Des résistances d'isolation R5, R6 sont interposées entre les bornes de la résistance R3 et des bornes de connexion A et B aux bases d'un premier et d'un deuxième transistors appairés, T21 et T22 respectivement, ces deux transistors, du type NPN, étant montés en émetteur commun. Une résistance de polarisation R7 est connectée entre les émetteurs de ces transistors et la masse.

Des capacités C1 et C2 sont installées entre les bornes de la résistance R1 et les bornes A et B, respectivement. Ainsi, seules les impulsions de tension apparaissant aux bornes de la résistance R1 sont transmises aux bornes A et B, qui constituent l'entrée des moyens de comparaison du dispositif selon l'invention. Ces moyens comprennent essentiellement les transistors T21 et T22 qui sont appairés de manière à présenter des caractéristiques identiques. Les bases de ceux-ci sont polarisées par le pont de résistances (R2, R3, R4). Des capacités C3, C4, C5 connectées aux résistances du pont assurent l'immunité au bruit de la polarisation des transistors T21 et T22.

Le collecteur du transistor T21 est connecté à la base d'un transistor T1 du type PNP. Une résistance R9 est connectée entre la base de ce transistor et son émetteur, lui-même connecté à la ligne $\overline{DATA}$ à travers une diode D1 montée passante de cette ligne vers le transistor, tout comme le collecteur du transistor T22. Cette diode assure ainsi la protection de la ligne $\overline{DATA}$ vis-à-vis de tensions et courants inverses originaires des moyens de comparaison. A cet égard, on notera aussi, entre la source d'énergie +V et la résistance R1, une autre diode de protection D2. Lorsque cette source d'énergie est constituée par la batterie d'un véhicule automobile, la diode D2 assure la protection du régulateur et des moyens de comparaison contre une inversion accidentelle des connexions à cette batterie.

La structure du dispositif de détection selon l'invention étant maintenant définie, on décrit dans la suite le fonctionnement de ce dispositif.

A la mise sous tension du dispositif, la polarisation de la base du transistor T22, égale à celle établie au point commun aux résistances R2 et R3 du pont R2, R3, R4, est telle que le transistor T22 conduit. Dans la boucle passant par les jonctions base-émetteur des transistors T21 et T22 et par la résistance R3, on a alors :

$$V_{be} (T22) = V_{be} (T21) + V(R3) \qquad (1)$$

avec :

$V_{be}$ (T22) et $V_{be}$ (T21), tensions émetteur-base des transistors correspondants et

V(R3), tension aux bornes de la résistance R3.

Cette résistance R3 est ajustée de manière que V(R3) soit égale à la tension que l'on prélève aux bornes de la résistance R1 quand une impulsion de courant d'amplitude égale à une amplitude prédéterminée est induite par le circuit de couplage sur la ligne $\overline{DATA}$.

A titre d'exemple, si on souhaite que le dispositif de détection selon l'invention ne prenne en compte que les impulsions de courant d'amplitude supérieure à 15 mA par exemple, celles-ci étant détectées à l'aide d'une résistance R1 de 12 ohms, on aura :

$$V(R3) = 15 \times 10^{-3} \times 12 = 0,180 \text{ mV}$$

alors l'équation (1) ci-dessus donne :

$$V_{be} (T21) = V_{be} (T22) - 0,180 \qquad (2)$$

Le transistor T22 étant conducteur, sa tension base-émetteur est alors de l'ordre 0,7 volt, comme il est bien connu. La tension base-émetteur du transistor T21 est donc, d'après l'équation (2) ci-dessus, inférieure à celle observée sur le transistor T22 quand celui-ci conduit. Ces transistors étant appairés, il s'ensuit que le transistor T21 est bloqué. La tension sur la base du transistor T1 du type PNP est donc égale à celle délivrée par le régulateur de tension, soit 5 volts. Le transistor T1 est donc bloqué et on trouve sur son collecteur une tension égale à celle de la masse. La tension alors établie sur une ligne S de sortie du dispositif, connectée au collecteur du transistor T1, est interprétée par un dispositif logique alimenté par cette ligne comme représentative de l'état logique bas "ou" zéro.

Ainsi donc, en l'absence d'impulsions de courant sur la ligne $\overline{DATA}$, la ligne S reste à l'état logique O. Il en est de même si une impulsion de courant d'amplitude inférieure à l'amplitude prédéterminée (de 15 mA par exemple) apparaît sur la ligne $\overline{DATA}$. En effet, la tension prélevée aux bornes de la résistance R1 (de 12 ohms) est alors inférieure à 0,180 volt. L'injection de cette tension V(R1) entre les points A et B de la boucle définie ci-dessus modifie la relation (2) comme suit :

$$V_{be} (T21) = V_{be} (T22) - 0,180 + V(R1) \qquad (3)$$

Comme V(R1) est inférieur à 0,180 volt, la relation (3) ci-dessus montre que $V_{be}$ (T21) reste inférieure à la valeur $V_{be}$ (T22) qui pourrait assurer son déblocage étant donné que, par hypothèse,

$V_{be}$ (T22) = 0,7 volt.

Examinons maintenant ce qui se passe quand une impulsion de courant I d'amplitude supérieure à l'amplitude prédéterminée (de 15 mA par exemple ) apparaît sur la ligne $\overline{DATA}$. La tension V(R1) injectée par les capacités C1 et C2 entre les points A et B est alors supérieure à 0,180 volt et la relation (3) ci-dessus montre que la tension base-émetteur du transistor T21 devient supérieure à la tension de seuil (de l'ordre de 0,7 volt) qui assure son déblocage. Simultanément, d'après la même relation (3), il apparaît que la tension base-émetteur du transistor T22 devient inférieure à cette tension de seuil.

Ainsi donc, lorsqu'une impulsion de courant d'amplitude supérieure à une valeur prédéterminée apparaît sur la ligne $\overline{DATA}$, le transistor T21 devient conducteur alors que le transistor T22 se bloque.

Le déblocage du transistor T21 fait passer la tension de base du transistor T1 à une valeur nettement inférieure à celle de son émetteur (grâce à la résistance R9 choisie pour ce faire), suffisante pour débloquer le transistor T1. La tension sur le collecteur de ce transistor passe alors à celle de la sortie du régulateur de tension, soit 5 volts environ et la ligne S passe donc à l'état logique 1 pendant toute la durée de l'impulsion de courant I, pour autant que celle-ci dépasse l'amplitude prédéterminée de 15 mA.

Ainsi peut-on détecter sur la ligne S des impulsions logiques de tension qui sont des images des impulsions de courant injectées sur la ligne $\overline{DATA}$ par le circuit de couplage, sous la commande du circuit de génération d'impulsions, telles que des impulsions de "réveil" de modules électroniques interconnectés dans un réseau local de communications.

Les impulsions logiques apparaissant sur la ligne S peuvent ensuite être filtrées en durée et délivrées à une unité centrale de traitement de données sensible à ces impulsions pour déclencher le réveil des modules.

On atteint ainsi l'objectif annoncé du dispositif selon l'invention, à savoir assurer la détection d'impulsions de courant induites sur la ligne $\overline{DATA}$ sans perturber la tension d'alimentation régulée de circuits connectés à cette ligne et en s'affranchissant de la consommation en courant en régime permanent. Le dispositif permet en outre de filtrer en amplitude les impulsions détectées. Du fait du montage utilisé de transistors appairés, connectés en émetteur commun, le dispositif est insensible au effet de la température sur les composants utilisés. Le dispositif est aussi insensible à des variations éventuelles de la tension d'alimentation du régulateur. Ceci est avantageux notamment en électronique automobile, car la batterie qui alimente alors le régulateur peut délivrer à sa sortie une tension très variable fonction de son état de charge, de la température ambiante, etc...

Bien entendu, la présente invention n'est néanmoins pas limitée à la détection d'impulsions de "réveil" de modules électroniques embarqués dans un véhicule automobile. Elle s'étend au contraire à la détection d'impulsions de courant induites sur toute ligne régulée en tension lorsqu'on souhaite que cette détection ne perturbe pas cette régulation de tension et lorsqu'on souhaite éliminer de la détection des impulsions de courant d'amplitude inférieure à une amplitude donnée.

## Revendications

1. Dispositif de détection d'impulsions de courant induites sur une ligne ($\overline{DATA}$) électrique alimentée par un régulateur (RT) de tension connecté à une source d'énergie électrique continue ( + V), comprenant des moyens (C1, C2) pour prélever une impulsion de tension correspondant à une impulsion (I) de courant induite sur la ligne ($\overline{DATA}$), ces moyens (C1, C2) étant connectés aux bornes d'une impédance (R1) placée sur une ligne connectant la source d'énergie électrique au régulateur de tension pour être sensibles, à travers celui-ci, aux impulsions (I) de courant induites sur la ligne ($\overline{DATA}$) alimentée par le régulateur, sans perturber la tension établie sur celle-ci.

2. Dispositif conforme à la revendication 1, caractérisé en ce qu'il comprend en outre des moyens (R2, R3, R4) de génération d'une tension de référence prédéterminée, des moyens de comparaison (T21, T22) connectés à ces moyens de génération (R2, R3, R4) et aux moyens de prélèvement (C1, C2) d'une impulsion de tension aux bornes de l'impédance (R1), et des moyens de commutation (T1) commandés par ces moyens de comparaison pour émettre sur une ligne de sortie (S) des impulsions logiques de tension images d'impulsions de tension prélevées par les moyens (C1, C2) et d'amplitude supérieure à la tension de référence.

3. Dispositif conforme à la revendication 2, caractérisé en ce que les moyens de comparaison comprennent des premier (T21) et deuxième (T22) transistors appairés (T21, T22) montés en émetteur commun, la tension de référence et les impulsions de tension prélevées par les moyens (C1, C2 ) étant appliquées simultanément en mode différentiel entre les bases (A, B) des deux transistors (T21, T22), de manière à faire conduire le premier transistor (T21) en bloquant le deuxième (T22) quand les impulsions de tension prélevées sont d'amplitude supérieure à celle de la tension de référence et à bloquer le premier transistor (T21) en laissant (T22) l'autre conduire dans le cas opposé, le premier transistor (T21) commandant le moyen de commutation (T1) de l'état logique de la ligne de sortie (S).

4. Dispositif conforme à la revendication 3, caractérisé en ce que ledit moyen de commutation est un transistor (T1) dont la tension de base est commandée par le circuit émetteur-collecteur du premier transistor (T21) de la paire (T21, T22).

5. Dispositif confome à la revendication 4, caractérisé en ce que les moyens de génération d'une tension de référence, les transistors appairés (T21, T22) et le transistor (T1) sont tous alimentés par la sortie du régulateur de tension.

6. Dispositif conforme à la revendication 5, caractérisé en ce que le circuit émetteur-collecteur du premier transistor (T21) de la paire (T21, T22) est directement connecté au régulateur (RT) de tension alors que le circuit correspondant du deuxième transistor (T22) est connecté à ce régulateur (RT) à travers une résistance (R9) de polarisation de la base du transistor (T1) de commutation.

7. Dispositif conforme à l'une qelconque des revendications 2 à 6, caractérisé en ce que les moyens de prélèvement (C1, C2) assurent un couplage capacitif entre l'impédance (R1) et les moyens de comparaison.

8. Dispositif conforme à l'une quelconque des revendications 3 à 7, caractérisé en ce que les moyens de génération (R2, R3, R4) d'une tension de référence sont constitués par un pont de résistances qui assurent simultanément la polarisation des transistors appairés (T21, T22).

**Claims**

1. An apparatus for detecting current pulses induced on an electric line supplied with power by a voltage regulator connected to a direct electrical energy source, comprising means for picking up a voltage pulse corresponding to a current pulse induced on the line, characterised in that said means (C1, C2) are connected to the terminals of an impedance (R1) placed on a line connecting the electrical energy source to the voltage regulator to be responsive through same to the current pulses induced on the line ($\overline{DATA}$) supplied by the regulator without disturbing the voltage established on the line.

2. An apparatus according to claim 1 characterised in that it further comprises means (R2, R3, R4) for generating a predetermined reference voltage, comparison means (T21, T22) connected to said generating means (R2, R3, R4) and to the pick-up means (C1, C2) for a voltage pulse at the terminals of the impedance (R1), and switching means (T1) controlled by said comparison means to emit on an output line (S) logic voltage pulses which are images of voltage pulses picked up by the means (C1, C2) and of an amplitude which is higher than the reference voltage.

3. An apparatus according to claim 2 characterised in that the comparison means comprise paired first (T21) and second (T22) transistors (T21, T22) which are connected in a common emitter configuration, the reference voltage and the voltage pulses picked up by the means (C1, C2) being simultaneously applied in a differential mode between the bases (A, B) of the two transistors, so as to cause the first transistor (T21) to conduct while switching off the second transistor (T22) when the voltage pulses picked up are of an amplitude higher than that of the reference voltage and to switch off the first transistor (T21) while allowing the other (T22) to conduct in the opposite case, the first transistor (T21) controlling the means (T1) for switching the logic state of the output line (S).

4. An apparatus according to claim 3 characterised in that said switching means is a transistor (T1) whose base voltage is controlled by the emitter-collector circuit of the first transistor (T21) of the pair (T21, T22).

5. An apparatus according to claim 4 characterised in that the means for generating a reference voltage, the paired transistors (T21, T22) and the transistor (T1) are all supplied with power by the output of the voltage regulator.

6. An apparatus according to claim 5 characterised in that the bitter-collector circuit of the first transistor (T21) of the pair (T21, T22) is directly connected to the voltage regulator while the corresponding circuit of the second transistor (T22) is connected to said regulator by way of a resistor (R9) for biasing the base of the switching transistor (T1).

7. An apparatus according to any one of claims 2 to 6 characterised in that the pick-up means (C1, C2) provide for capacitive coupling between the impedance (R1) and the comparison means.

8. An apparatus according to any one of claims 3 to 7 characterised in that the means (R2, R3, R4) for generating a reference voltage are formed by a bridge arrangement of resistors which simultaneously provide for biasing of the paired transistors.

**Patentansprüche**

1. Vorrichtung zum Feststellen von Stromimpulsen, die in einer elektrischen Leitung induziert werden, welche von einem Spannungsregler beaufschlagt wird, der mit einer elektrischen Gleichstromquelle verbunden ist, mit einer Anordnung zum Abgreifen eines Spannungsimpulses entsprechend einem in der Leitung induzierten Stromimpuls, dadurch gekennzeichnet, daß die Anordnung (C1, C2) mit den Anschlüssen einer Impedanz (R1) verbunden ist, welche in einer Leitung vorgesehen ist, die die elektrische Energiequelle mit dem Spannungsregler verbindet, um so durch letzteren auf Stromimpulse zu reagieren, die in der vom Regler beaufschlagten Leitung $\overline{DATA}$ induziert werden, ohne die an ihr anliegende Spannung zu beeinträchtigen.

2. Vorrichtung nach Anspruch 1, dadurch gekennzeichnet, daß sie außerdem eine Anordnung (R2, R3, R4) zur Erzeugung einer vorgegebenen Referenzspannung aufweist und eine Vergleichsanordnung (T21, T22), die mit der Anordnung zur Erzeugung (R2, R3, R4) und mit der Anordnung (C1, C2) zum Abgreifen eines Spannungsimpulses an den Anschlüssen der Impedanz (R1) verbunden ist, sowie eine Umschaltanordnung (T1) aufweist, die durch die Vergleichsanordnung gesteuert wird, um einer Ausgangsleitung (S) logische Spannungsimpulse zuzuführen, die ein Abbild sind der von der Anordnung (C1, C2) abgegriffenen Spannungsimpulse, deren Amplituden größer als diejenigen der Referenzspannung sind.

3. Vorrichtung nach Anspruch 2, dadurch gekennzeichnet, daß die Vergleichsanordnung erste (T21) und zweite (T22) gepaarte Transistoren (T21, T22) aufweist, die einen gemeinsamen Emitter besitzen, wobei die Referenzspannung und die durch die Anordnung (C1, C2) abgegriffenen Spannungsimpulse gleichzeitig im differentiellen Modus an die Basen (A, B) der beiden Transistoren angelegt werden, dergestalt, daß der erste Transistor (T21) leitet und der zweite Transistor (T22) gesperrt wird, wenn die Amplituden der abgegriffenen Spannungsimpulse größer sind als diejenige der Referenzspannung und daß der erste Transistor (T21) gesperrt wird und der zweite Transistor (T22) leitet im entgegengesetzten Fall, wobei der erste Transistor (T21) die Umschaltanordnung (T1) in den logischen Zustand der Ausgangsleitung (S) steuert.

4. Vorrichtung nach Anspruch 3, dadurch gekennzeichnet, daß die Umschaltanordnung ein Transistor (T1) ist, dessen Basisspannung durch den Emitter-Kollektor-Schaltkreis des ersten Transistors (T21) des Paares (T21, T22) gesteuert wird.

5. Vorrichtung nach Anspruch 4, dadurch gekennzeichnet, daß die Anordnung zur Erzeugung einer Referenzspannung, die gepaarten Transistoren (T21, T22) und der Transistor (T1) sämtlich durch den Ausgang des Spannungsreglers gespeist werden.

6. Vorrichtung nach Anspruch 5, dadurch gekennzeichnet, daß der Emitter-Kollektor-Schaltkreis des ersten Transistors (T21) des Paares (T21, T22) direkt mit dem Spannungsregler verbunden ist und daß der dem zweiten Transistor (T22) entsprechende Schaltkreis mit dem Regler über einen Polarisationswiderstand (R9) an der Basis des Umschalttransistors (T1) verbunden ist.

7. Vorrichtung nach einem der Ansprüche 2 bis 6, dadurch gekennzeichnet, daß die Abgreifanordnung (C1, C2) eine kapazitive Kopplung zwischen der Impedanz (R1) und der Vergleichsanordnung gewährleistet.

8. Vorrichtung nach einem der Ansprüche 3 bis 7, dadurch gekennzeichnet, daß die Anordnung (R2, R3, R4) zur Erzeugung einer Referenzspannung aus einer Widerstandsbrücke besteht, welche zugleich die Polarisation der gepaarten Transistoren gewährleistet.